# EUROPEAN PATENT APPLICATION

(11) **EP 2 364 016 A1**
(43) Date of publication of application: **07.09.2011**
(21) Application number: 11250215.8
(22) Date of filing: 24.02.2011
(51) Int. Cl.: H04N 7/14, H04N 7/15, H04L 29/06, G06F 3/038

(54) **Apparatus, system, and method of sharing drawing data**

(30) Priority: 01.03.2010 JP 2010044013; 22.12.2010 JP 2010285919
(71) Applicant: Ricoh Company, Limited, Tokyo 143-8555 (JP)
(72) Inventor: Kasuya, Yuuji, Ricoh Company, Ltd., Tokyo 143-8555 (JP); Araki, Tadashi , Ricoh Company, Ltd., Tokyo 143-8555 (JP); Ohmura, Keiji , Ricoh Company, Ltd., Tokyo 143-8555 (JP)
(74) Representative: White, Duncan Rohan

(57) **Abstract**

A drawing image sharing apparatus captures an image being displayed onto a first drawing object (112a) as a captured image, before displaying a drawing image of a second drawing object (112b) onto the first drawing object (112a). The drawing image sharing apparatus generates a differential image that reflects the difference between the captured image and a previous projection image, and transmits the differential image for projection onto the second drawing object.

## Description

The present invention generally relates to sharing of drawing data, and more specifically to an apparatus, system, and method of sharing drawing data among a plurality of remotely located sites.

The recent technology allows image data to be shared among a plurality of remotely located sites to facilitate communication among the plurality of sites. For example, Japanese Patent Application Publication No. 2005-203886 describes a system, which includes two projectors that are located at different places, and a server that transmits an image to each of the projectors for projection onto a screen through each projector. Each projector captures an image drawn onto the whiteboard, and transmits the captured image to the server. The server combines an original image with the captured image received from the projector, and sends the combined image to another projector for projection onto the screen through another projector.

In the system described in Japanese Patent Application Publication No. 2005-203886, projection of the combined image onto the screen is interpreted at a predetermined interval, as the system needs to capture the image drawn onto the whiteboard to generate the combined image for projection.

In view of the above, one aspect of the present invention provides a system, apparatus, and method of sharing drawing data among a plurality of remotely located sites, each capable of generating an image to be projected with improved visibility.

Another aspect of the present invention provides a system, apparatus, and method of sharing drawing data among a plurality of remotely located sites, each capable of generating an image to be projected more seamlessly.

A more complete appreciation of the disclosure and many of the attendant advantages and features thereof can be readily obtained and understood from the following detailed description with reference to the accompanying drawings, wherein:
FIG. 1 is an illustration for explaining a drawing data sharing system, according to an example embodiment of the present invention;
FIG. 2 is a schematic block diagram illustrating a functional structure of a drawing image sharing apparatus of FIG. 1, according to an example embodiment of the present invention;
FIG. 3 is a flowchart illustrating operation of processing data to be shared with a remotely located site, performed by the drawing image sharing apparatus of FIG. 1, according to an example embodiment of the present invention;
FIG. 4 is a flowchart illustrating operation of generating differential image data, performed by the drawing image sharing apparatus of FIG. 1, according to an example embodiment of the present invention;
FIG. 5 is a flowchart illustrating operation of calculating an average ratio value, performed by the drawing image sharing apparatus of FIG. 1, according to an example embodiment of the present invention;
FIG. 6 is a flowchart illustrating operation of calculating an average differential value, performed by the drawing image sharing apparatus of FIG. 1, according to an example embodiment of the present invention;
FIG. 7 is a flowchart illustrating operation of calculating a differential value, performed by the drawing image sharing apparatus of FIG. 1, according to an example embodiment of the present invention;
FIGS. 8A and 8B are a flowchart illustrating operation of processing data to be shared with a remotely located site, performed by the drawing image sharing apparatus of FIG. 1, according to an example embodiment of the present invention;
FIGS. 9A and 9B are a flowchart illustrating operation of processing data to be shared with a remotely located site, performed by the drawing image sharing apparatus of FIG. 1, according to an example embodiment of the present invention; and
FIG. 10 is a schematic block diagram illustrating a functional structure of a drawing image sharing apparatus of FIG. 1, according to an example embodiment of the present invention.

The accompanying drawings are intended to depict example embodiments of the present invention and should not be interpreted to limit the scope thereof. The accompanying drawings are not to be considered as drawn to scale unless explicitly noted.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that operate in a similar manner.

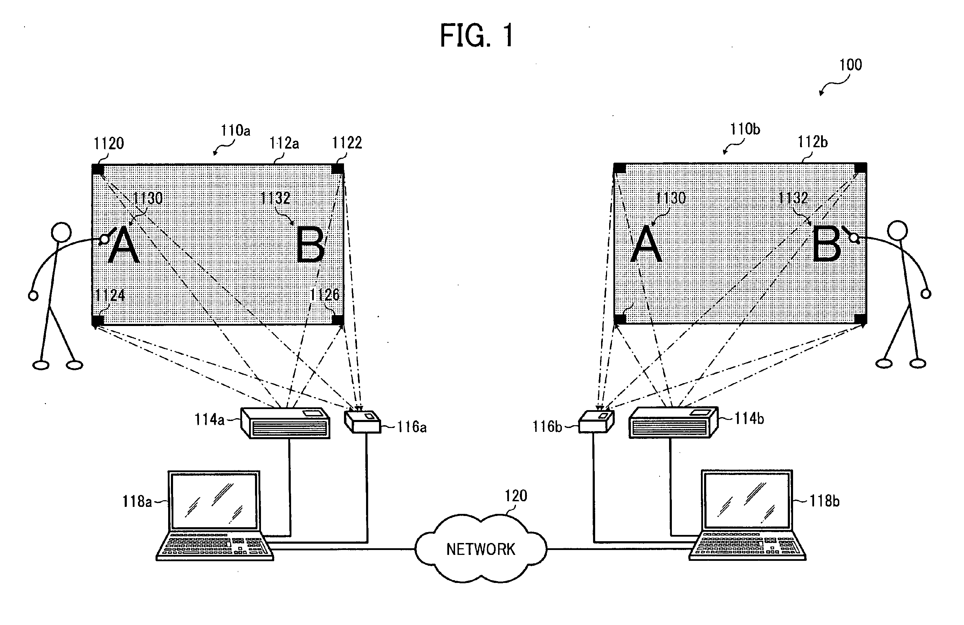

FIG. 1 illustrates a drawing data sharing system 100 according to an example embodiment of the present invention. The drawing data sharing system 100 includes two sites including a site 110a and a site 110b, which are remotely located from each other. For example, a user at the site 110a and a user at the site 110b are made communicable with each other through a network 120 such as the Internet, local area network (LAN), or wide area network (WAN). In FIG. 1, only two sites 110a and 110b are shown for the descriptive purposes. Alternatively, the drawing data sharing system 100 may be designed to include more than two sites. Further, any desired number of sites may be made communicable with one another through a leased line.

The site 110a is provided with a drawing object ("object") 112a, a projection device 114a, an image capturing device 116a, and a drawing image sharing apparatus 118a. The site 110b is provided with a drawing object ("object") 112b, a projection device 114b, an image capturing device 116b, and a drawing image sharing apparatus 118b, which are similar in function and structure to the drawing object ("object") 112a, the projection device 114a, the image capturing device 116a, and the drawing image sharing apparatus 118a, which are each provided at the site 110a.

The object 112a allows the user at the site 110a to draw thereon any desired drawings, while displaying thereon an image that is projected by the projection device 114a. For example, the object 112a may be implemented by any desired material on which the user at the site 110a can write any drawings such as characters or figures, such as a white board, a black board, or a paper sheet. In FIG. 1, the object 112a displays a character "A" 1130 drawn by the user at the site 110a, which is one example of drawings. The object 112a further displays thereon an image projected by the projection device 114a, such as a character "B" 1132 drawn by the user at the site 110b. The user may draw an image using any desired writing tool such as whiteboard marker.

The projection device 114a is any device that projects an image onto the object 112a, such as the drawing image of the site 110b that is received from the site 110b through the network 120. For example, the projection device 114a may be implemented by a projector. In FIG. 1, the projection device 114a projects the drawing image of the site 110b, which includes the character "B" 1132, onto the object 112a of the site 110a. In this example, a projection image such as the drawing image of the site 110b is displayed through the object 112a and the projection device 114a. In alternative to using the object 112a and the projection device 114a, any display device such as a liquid crystal display or plasma display may be used to project the projection image such as the drawing image of the site 110b. In such case, the display device's screen may be covered over with a transparent film or board to allow the user to draw drawings on the film or board. In another example, the display device's screen may be implemented as a touch panel screen, which allows the user to draw drawings on the screen.

The image capturing device 116a is any device that captures an image being displayed onto the object 112a as a captured image. The captured image includes a drawing image that reflects drawings drawn by the user onto the object 112a and a projection image that is projected by the projection device 114a based on the drawing image that reflects drawings drawn onto the object 112b by the user at the site 112b. For example, the image capturing device 116a may be implemented by a digital camera, digital video camera, web camera, etc., which is capable of capturing an image being displayed onto the object 112a. In this example, the image capturing device 116a captures the image being displayed onto the object 112a, according to an instruction received from the drawing image sharing apparatus 118a, when the drawing image sharing apparatus 118a receives the drawing image drawn onto the object 112b from the site 110b. Alternatively, the image capturing device 116a may capture the image being displayed onto the object 112a at a predetermined time interval under control of the drawing image sharing apparatus 118a.

The drawing image sharing apparatus 118a extracts the drawing image that reflects drawings drawn onto the object 112a from the captured image of the object 112a that is captured by the image capturing device 116a, and sends the extracted drawing image of the site 110a to the site 110b. The drawing image sharing apparatus 118a further causes the projection device 114a to display a drawing image that reflects drawings drawn onto the object 112b and received from the site 110b, onto the object 112a. In this manner, the drawing image that reflects drawings drawn by each user is shared among a plurality of sites. For example, the drawing image sharing apparatus 118a may be implemented by any desired computer such as a notebook computer or a desktop computer.

The drawing image sharing apparatus 118a includes a processor such as a central processing unit (CPU), and a memory. The processor may be implemented by the PENTIUM processor or PENTIUM compatible processor. The memory may be implemented by a volatile memory such as a random access memory (RAM), and a nonvolatile memory such as a read only memory (ROM) or a hard disk device (HDD). More specifically, the ROM or HDD stores various programs and data to be used by the processor. The RAM functions as a work memory of the processor to allow the processor to execute the program read out from the ROM or HDD. In this example, the memory of the drawing image sharing apparatus 118a stores therein a drawing image sharing program, which is executed by the processor under an operating systems, such as Windows-series OS, MAC OS, UNIX OS, or LINUX OS. The drawing image sharing program may be written in any desired programming language such as assembler, C, C++, Java, Java Script, PERL, RUBY, PHYTON, etc. Upon execution of the drawing image sharing program, the processor causes a computer to operate or function as the drawing image sharing apparatus 118a. The drawing image sharing apparatus 118a further includes an interface, such as a peripheral device interface for connection with a peripheral device such as the projection device 114a or the image capturing device 116a, and a network interface for connection with the network 120. Through the interface, the drawing image sharing apparatus 118a communicates with the peripheral device to transmit various data such as the image to be projected by the projection device 114a to the projection device 114a or the captured image captured by the image capturing device 116a from the image capturing device 116a. The drawing image sharing apparatus 118a communicates with the drawing image sharing apparatus 118b at the site 110b to transmit or receive various data such as the drawing image to or from the drawing image sharing apparatus 118b through the network 120.

Any one of operations or functions of the drawing image sharing apparatus 118a may be performed according to a plurality of instructions that are written in the form of computer program using any desired programming language and is instable onto any computer. The drawing image sharing program may be stored in any desired memory such as a hard disk device, or a removable medium such as CD-ROM, MO, flexible disk, EEPROM, or EPROM, for example, for distribution. Further, the drawing image sharing program may be distributed over the network in the form readable by a device such as a computer.

Although not described above, the devices or apparatuses provided at the site 110b operate in a substantially similar manner as the devices or apparatuses provided at the site 110a.

Further, a structure of the drawing image sharing system 100 is not limited to this example shown in FIG. 1. For example, the projection device 114a, the image capturing device 116a, and the drawing image sharing apparatus 118a may be incorporated into one apparatus. In another example, the drawing image sharing system 100 may be additionally provided with a server that manages data to be shared among the plurality of remotely located sites 110a and 110b through the drawing image sharing apparatuses 118a and 118b.

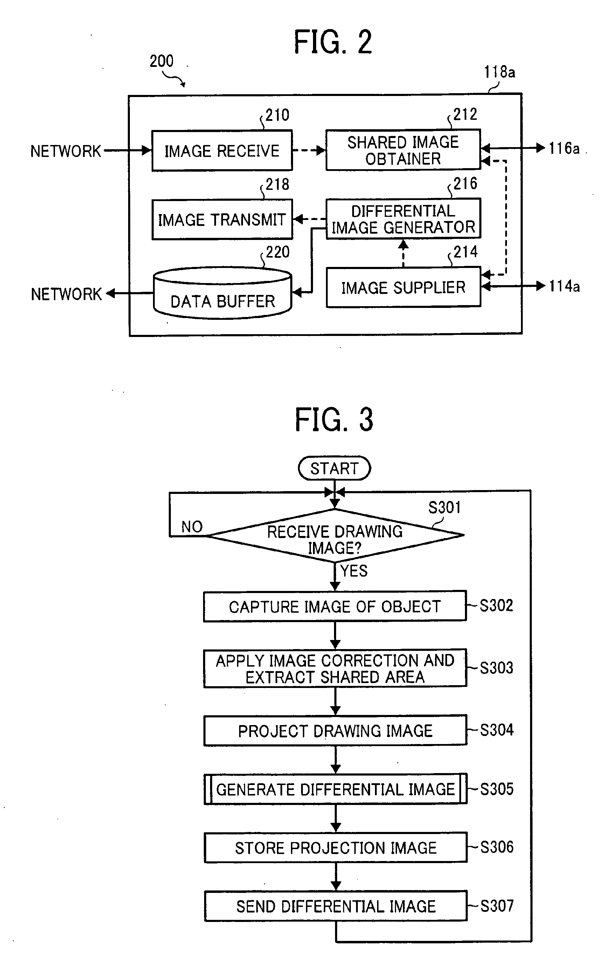

FIG. 2 illustrates a functional structure 200 of the drawing image sharing apparatus 118a. The drawing image sharing apparatus 118a includes an image receive 210, a shared image obtainer 212, an image supplier 214, a differential image generator 216, an image transmit 218, and a data buffer 220. For example, the processor of the drawing image sharing apparatus 118a causes the drawing image sharing apparatus 118a to have the functional structure 200 shown in FIG. 2 upon execution of the drawing image sharing program. Further, in this example, the data buffer 220 operates with the memory such as ROM or HDD of the drawing image sharing apparatus 118a to write in or read out various data to or from the memory.

The image receive 210 receives the drawing image that is sent from a remotely located site such as the site 110b through the network 120. The image receive 210 stores the drawing image of the remotely located site in the RAM, and notifies the shared image obtainer 212 that the drawing image is received.

The shared image obtainer 212 obtains an image to be shared with the remotely located site, which includes an image being displayed onto an area to be shared with the remotely located site. More specifically, in this example, the shared image obtainer 212 causes the image capturing device 116a to capture an image of the object 112a including the drawing image drawn onto the object 112a and the projection image projected by the projection device 114a as a captured image. The shared image obtainer 212 performs perspective transformation on the captured image obtained by the image capturing device 116a, for example, by applying image correction to the captured image such as keystone correction, aspect ratio correction to correct the length-to-width ratio, and/or rotation correction.

As illustrated in FIG. 1, the shared image obtainer 212 specifies a shared area of the object 112a, which is to be shared with the remotely located site, using a marker image including markers 1120, 1122, 1124, and 1126. The markers 1120 to 1126 of the marker image specifies the shared area on the object 112a. Further, the shared image obtainer 212 calculates the size of the shared area that is specified by the markers 1120 to 1126 of the marker image. When the shared image obtainer 212 receives notification from the image supplier 214 that the maker image is projected onto the object 112a through the projection device 114a, the shared image obtainer 212 causes the image capturing device 116a to capture the image of the object 112a, and applies perspective transformation to the captured image obtained from the image capturing device 116a. The shared image obtainer 212 detects the coordinate value of each of the markers 1120 to 1126 from the captured image, and specifies the shared area based on assumption that the detected coordinate values of the markers 1120 to 1126 correspond to the coordinate values of the corners of the shared area. The shared image obtainer 212 calculates the size of the shared area using the corner coordinate values of the shared area, i.e., the coordinate values of the markers 1120 to 1126. The corner coordinate values of the shared area and the size of the shared area are respectively stored in the memory, such as the RAM or HDD of the drawing image sharing apparatus 118a.

In alternative to the above-described example, the shared image obtainer 212 may specify the shared area of the object 112a and calculate the size of the shared area, without using the markers 1120 to 1126 of the marker image. In such case, the image supplier 214 causes the projection device 114a to project a white colour image, which is stored in the memory through the data buffer 220, onto the object 112a. The shared image obtainer 212 may specify the coordinate values of corners of the shared area, based on the difference in brightness between an area where the white colour image is projected and the area where the white colour image is not projected. Once the coordinate values of corners of the shared area are specified, the shared image obtainer 212 calculates the size of the shared area using the corner coordinate values of the shared area. In this example, it is assumed that the data buffer 220 previously stores at least one of the marker image having the markers 1120 to 1126 and the white colour image having a predetermined size in any desired memory of the drawing image sharing apparatus 118a. For the descriptive purposes, the marker image and the white colour image or any image that may be used for specifying the area to be shared may be collectively referred to as a reference image.

When the shared image obtainer 212 receives notification from the image receive 210 that the drawing image is received from the remotely located site, the shared image obtainer 212 causes the image capturing device 116a to capture an image of the object 112a to obtain the captured image from the image capturing device 116a. The shared image obtainer 212 applies perspective transformation to the captured image, and extracts an image of the shared area from the captured image using the coordinate values of the corners of the shared image and/or the size of the shared area that are respectively read out from the memory. The extracted image of the shared area is stored in the memory such as the RAM or the HDD of the drawing image sharing apparatus 118a. Once the image of the shared area is stored, the shared image obtainer 212 sends notification to the image supplier 214 that processing of the captured image is completed. Alternatively, the shared image obtainer 212 may send notification to the image supplier 214 when the shared image obtainer 212 sends an instruction for capturing the image of the object 112a to the image capturing device 116a. When the notification from the shared image obtainer 212 is received, the image supplier 214 supplies the image of the shared area to the projection device 114a for projection onto the object 112a.

In the above-described example, the shared image obtainer 212 of the drawing image sharing apparatus 118a applies perspective transformation to the captured image. Alternatively, the drawing image sharing system 100 may be provided with a perspective transformation circuit that applies perspective transformation to the captured image captured by the image capturing device 116a according to an instruction received from the shared image obtainer 212 of the drawing image sharing apparatus 118a.

Still referring to FIG. 2, the image supplier 214 causes the projection device 114a to display a drawing image received from the remotely located site onto the object 112a. More specifically, in this example, the image supplier 214 supplies the drawing image of the remotely located site, which is received by the image receive 210, to the projection device 114a to cause the projection device 114a to display the drawing image onto the object 112a. When the image supplier 214 receives notification from the shared image obtainer 212 of completion of processing the captured image, the image supplier 214 obtains the drawing image of the remotely located site from the RAM. The image supplier 214 applies size correction processing to make the size of the drawing image to fit into the shared area size, by size enlargement or size reduction. The corrected drawing image is sent to the projection device 114a for projection. In case of applying size correction processing to the drawing image, the image supplier 214 reads out the shared area size from the memory to compare it with the actual size of the drawing image. When it is determined that the size differs between the shared area and the drawing image, the image supplier 214 calculates the ratio between the shared area and the drawing image, and enlarges or reduces the size of the drawing image using the calculated ratio. The image supplier 214, which has sent the drawing image to the projection device 114a for projection, stores the drawing image that is just projected onto the object 112a in the RAM as a previous projection image, and notifies the differential image generator 216 that projection of the drawing image is completed.

As described above, the image supplier 214 causes the projection device 114a to display the marker image onto the object 112a. The marker image may be previously stored in the nonvolatile memory of the drawing image sharing apparatus 118a such as the HDD. The image supplier 214 reads out the marker image from the nonvolatile memory through the data buffer 220 to display the marker image through the projection device 114a. In this example, the image supplier 214 causes the projection device 114a to display the marker image onto the object 112a when the drawing image sharing apparatus 118a is powered on. Alternatively, the image supplier 214 may cause the projection device 114a to display the marker image at any time, for example, according to an instruction received from the shared image obtainer 212 or at a predetermined time interval that is previously set by the user or by default.

In this example, the marker image is defined by the markers of blue colour, however, any other colour may be used in replace of blue colour. Further, in this example, the markers defining the marker image each have a rectangular shape, however, any other shape such as triangular or quadrant shape may be used in replace of rectangular shape. Further, in this example, the shared area is specified by the markers each corresponding to the corner of the shared area, however, the shared area may be specified in various other ways. For example, each of the markers may be arranged at the middle of the border line of the shared area to specify the shared area.

Still referring to FIG. 2, the differential image generator 216 generates a differential image, which indicates the difference between the previous projection image stored in the memory through the data buffer 220 and the captured image obtained from the image capturing device 116a. As described above, the captured image may be trimmed based on an area to be shared. When the differential image generator 216 receives notification from the image supplier 214 that projection of the drawing image received from the remotely located site is completed, the differential image generator 216 obtains the previous projection image through the data buffer 220, and generates a differential image using the captured image and the previous projection image. In this example, as the drawing image sharing apparatus 118a and 118b each performs capturing of the image to be shared before projection of the image to be shared, the captured image may not contain a drawing image that reflects drawings drawn by the user. For this reason, the drawing image sharing apparatus 118a generates a differential image, based on the difference between the previous projection image, and the captured image including the drawing image that reflects drawings just drawn by the user at the site 110a. With this differential image, which is the drawing image that reflects the drawings drawn by the user at the site 110a and not included in the previous projection image, the drawing image sharing apparatus 118b is able to project the drawing image of the site 110a even when capturing of the image at the site 110a is performed in prior to projection of the image received from the site 110b. Similarly, the drawing image sharing apparatus 118b generates a differential image, which is the drawing image that reflects the drawings drawn by the user at the site 110b and not included in the previous projection image, and transmits the drawing image of the site 110b to the drawing image sharing apparatus 118a for projection onto the object 112a.

The differential image generator 216 erodes or dilates the boundaries of the drawing image in the previous projection image obtained through the data buffer 220 using a filter including, for example, Morphological operations such as Erode and Dilate filter, or smoothing filter. This suppresses the negative influences that may be otherwise caused by the positional shift of the drawing image in the previous projection image with respect to the captured image.

The differential image generator 216 respectively segments the previous projection image and the captured image into colour components of red (R), green (G), and blue (B) to obtain the images of R, G, and B colour components for the previous projection image and the captured image.

In one example, the differential image generator 216 generates the differential image that reflects the difference between the previous projection image and the captured image, by calculating the average ratio value of each pixel respectively in the previous projection image and the captured image for each of the R, G, and B colour component images. The average ratio value of a target pixel is a brightness value of the target pixel, which is calculated by multiplying the brightness value of the background colour with the average ratio of the brightness value of the target pixel with respect to the average value of the brightness values of pixels surrounding the target pixel. The average ratio value of a target pixel having the coordinate value (x, y) is calculated as follows.

First, the differential image generator 216 specifies a rectangle having the length m and the width n, which surrounds the target pixel (x, y). In this example, m and n are each previously defined as an arbitrary integer.

Second, the differential image generator 216 calculates the average value AVE of the brightness values of the pixels that are included in the mXn rectangle, using an integral image of the captured image for a selected colour component.

Third, the differential image generator 216 multiplies the brightness value of the background colour of the captured image with the average ratio value of the target pixel (x,y). The average ratio value of the target pixel (x.y) is the ratio of the brightness value of the target pixel (x,y) with respect to the average value AVE of the brightness values of the pixels included in the mXn rectangle. Assuming that the object 112a is a white board, the brightness value of the background colour of the captured image is 200. When the average value AVE is greater than 1, the average ratio value of the target pixel (x,y) is assumed to be the same as the brightness value of the background colour. Further, the brightness value of the background colour may be previously defined by the user.

In another example, the differential image generator 216 generates the differential image by calculating the average differential value of each pixel respectively in the projection image and the captured image for each of the R, G, and B colour component images. The average differential value of a target pixel is a brightness value of the target pixel, which is calculated by subtracting the average value of the brightness values of pixels surrounding the target pixel from the brightness value of the target pixel. The average differential value of a target pixel having the coordinate value (x, y) is calculated as follows.

First, the differential image generator 216 specifies a rectangle having the length m and the width n, which surrounds the target pixel (x, y). In this example, m and n are each previously defined as an arbitrary integer.

Second, the differential image generator 216 calculates the average value AVE of the brightness values of the pixels that are included in the mXn rectangle, using an integral image of the captured image for a selected colour component.

Third, the differential image generator 216 subtracts the average value AVE of the brightness values of the pixels included in the mXn rectangle, from the brightness value of the target pixel (x,y).

In one example, the differential image generator 216 calculates the difference in pixel values between the average ratio value of the target pixel in the captured image and the brightness value of the target pixel in the previous projection image to obtain a differential value of the target pixel between the captured image and the previous projection image. In another example, the differential image generator 216 calculates the difference in pixel values between the average differential value of the target pixel in the captured image and the average differential value of the target pixel in the previous projection image to obtain a differential value of the target pixel between the captured image and the previous projection image. The differential image generator 216 obtains the differential value between the captured image and the previous projection image for all of the pixels, respectively, for the R, G, and B colour component images, and generates R, G, and B colour components respectively having pixels with the obtained differential values. The differential image generator 216 further combines the R, G, and B colour components to obtain the differential image.

The differential image generator 216 may further apply filtering process to the differential image to cut the yellow colour component of the differential image. The differential image generator 216 compares the differential value of the brightness value between the background colour and one of the red colour component and the green colour component, with respect to the differential value of the brightness value between the background colour and the blue colour component. More specifically, the differential image generator 216 obtains the differential value of the brightness value between the background colour and the red colour component ("red differential value"), the differential value of the brightness value between the background colour and the green colour component ("green differential value"), and the differential value of the brightness value between the background colour and the blue colour component ("blue differential value"). When the blue differential value is greater than the greater one of the red differential value and the green differential value, the differential image generator 216 sets the blue differential value to a value obtained by multiplying the greater one of the red differential value and the green differential value with a constant. When the blue differential value is equal to or less than the greater one of the red differential value and the green differential value, the differential image generator 216 keeps the blue differential value as it is.

For example, assuming that the brightness value of the background colour is 200, the brightness value of the red colour component is 190, the brightness value of the green colour component is 180, and the brightness value of the blue colour component is 140, the differential values with respect to the background colour are 10 for the red colour component, 20 for the green colour component, and 60 for the blue colour component. In such case, the blue differential value of 60 is greater than either one of the red differential value of 10 and the green differential value of 20. Accordingly, the blue differential value is set to 40, which is obtained by multiplying the greatest one of the red differential value and the green differential value, which is 20, with a constant such as "2". The brightness value of the blue colour component is thus 160, which is obtained by subtracting the newly set blue differential value of 40 from the background brightness value of 200. In this example, the constant may be any arbitrary number. In order to sufficiently reduce the level of the yellow colour component affected by a light emitted from the projection device 114a, the constant may be preferably set to an arbitrary number that ranges between 1 and 2.

Once the differential image is generated, the differential image generator 216 stores the projection image that the image supplier 214 just transmitted to the projection device 114a in the memory such as the HDD through the data buffer 220, as the previous projected image. The differential image generator 216 further notifies the image transmit 218 that generation of the differential image is completed.

The image transmit 218 sends the differential image generated by the differential image generator 216 to the remotely located site, such as the drawing image sharing apparatus 118b at the site 110b, through the network 120. When the image transmit 218 receives notification from the differential image generator 216 indicating generation of the differential image, the image transmit 218 sends the differential image, which is the drawing image of the site 110a that is not reflected in the previous projected image, to the drawing image sharing apparatus 118b at the site 110b through the network 120.

As described above, the drawing image sharing apparatus 118a generates the differential image, which reflects the drawing image of the site 110a, to the drawing image sharing apparatus 118b that is remotely located.

In case of the system described in Japanese Patent Application Publication No. 2005-203886, the drawing image of the site 110a and the drawing image of the site 110b are combined before projection such that the resultant combined image may suffer from echo due to the drawing images being superimposed one above the other. In contrary, according to the above-described example of the present invention, since the drawing image of one site is transmitted to the other site for projection without being combined with the drawing image of the other site, the resultant projected image is not affected by echo phenomenon, thus improving visibility of the projection image.

Referring now to FIG. 3, operation of processing the image to be shared with the remotely located site, performed by the drawing image sharing apparatus 118a, is explained according to an example embodiment of the present invention.

At S301, the image receive 210 determines whether the drawing image is received from the remotely located site through the network 120. When it is determined that the drawing image is not received ("NO" at S301), the operation repeats S301. When it is determined that the drawing image is received ("YES" at S301), the image receive 210 notifies the shared image obtainer 212 that the drawing image is received, and the operation proceeds to S302.

At S302, the shared image obtainer 212 causes the image capturing device 116a to capture an image of the object 112a to obtain the captured image, and notifies the image supplier 214 that the captured image is obtained.

At S303, the shared image obtainer 212 extracts a shared area from the captured image to obtain an image to be shared ("shared image"), and applies image correction such as perspective transformation to the shared image. When processing of the captured image is completed, the shared image obtainer 212 notifies the image supplier 214 that processing of the captured image is completed.

At S304, the image supplier 214 sends the drawing image of the remotely located site, which is received at the image receive 210, to the projection device 114a to cause the projection device 114a to project the drawing image onto the object 112a.

At S305, the differential image generator 216 generates a differential image, which reflects the difference between the previous projection image previously projected and stored in the memory, and the captured image.

At S306, the differential image generator 216 stores the projection image that is sent by the image supplier 214 to the projection device 114a at S304, in the memory through the data buffer 220, as the previous projection image to be used for processing the shared image for the next time. The differential image generator 216 further sends an instruction to the image transmit 218 to cause the image transmit 218 to send the differential image generated at S305.

At S307, the image transmit 218 sends the differential image to the drawing image sharing apparatus 118b at the remotely located site according to the instruction received from the differential image generator 216, and the operation returns to S301 to determine whether another drawing image is received from the remotely located site.

As described above, in this example, the drawing data sharing system of FIG. 1 captures the image to be shared before the image to be shared is projected. Accordingly, the drawing image sharing apparatus 118a does not have to wait for processing of the shared image to be completed before starting capturing of the shared image. As operation of capturing the shared image does not have to be interrupted, the overall processing time required for processing the shared image is greatly reduced. This further increases a number of shared images to be transmitted or received at the drawing image sharing apparatus 118a per unit time, thus facilitating real-time communication among the plurality of remotely located sites.

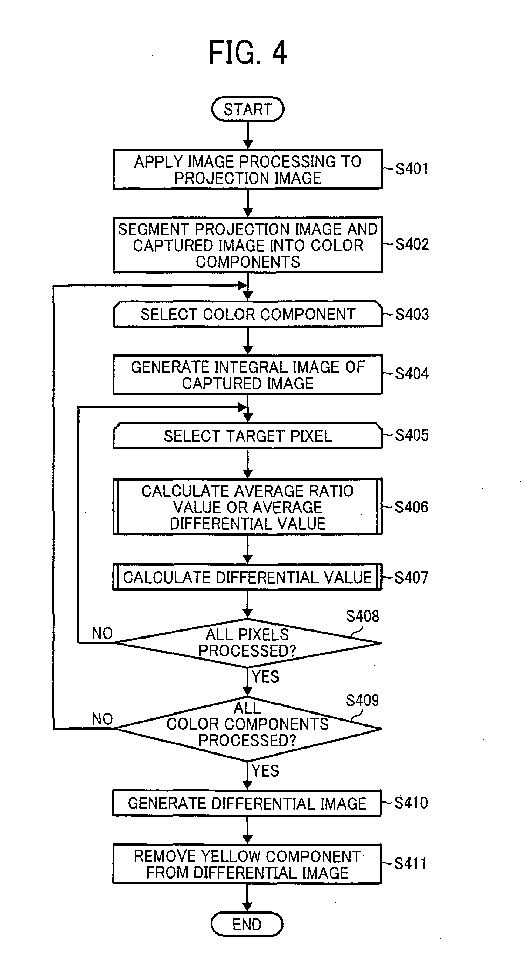

FIG. 4 is a flowchart illustrating operation of generating the differential image, performed by the differential image generator 216, according to an example embodiment of the present invention. The operation of FIG. 4 is performed at S305, when the differential image generator 216 receives notification from the image supplier 214 that the projection image is sent to the projection device 116.

At S401, the differential image generator 216 obtains the previous projection image from the memory such as the HDD through the data buffer 220, and applies image processing to the previous projection image to dilate the boundaries of the drawing image in the previous projection image.

At S402, the differential image generator 216 obtains the captured image, from the RAM through the data buffer 220. The differential image generator 216 segments the previous projection image that is obtained at S401 and the captured image into colour components of R, G, and B, respectively.

At S403, the differential image generator 216 selects one of the colour components of R, G, and B for processing.

At S404, the differential image generator 216 generates an integral image of the captured image for the selected one of the R, G, and B colour components.

At S405, the differential image generator 216 selects a target pixel, respectively, in the previous projection image and the captured image, for processing.

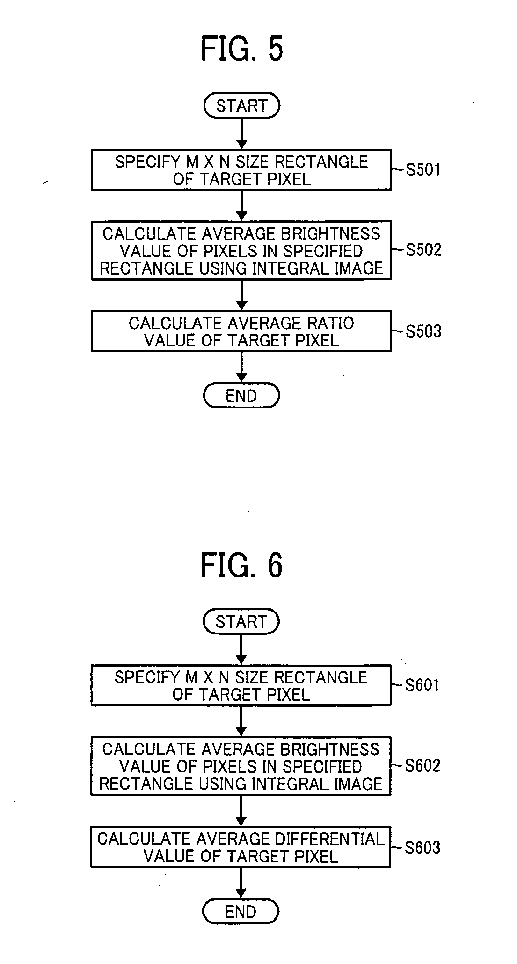

At S406, the differential image generator 216 performs calculation of an average ratio value of the target pixel in the previous projection image and the captured image for the selected one of R, G, and B colour components as described below referring to FIG. 5. Alternatively, the differential image generator 216 performs calculation of an average differential value of the target pixel in the previous projection image and the captured image for the selected one of the R, G, and B colour components as described below referring to FIG. 6.

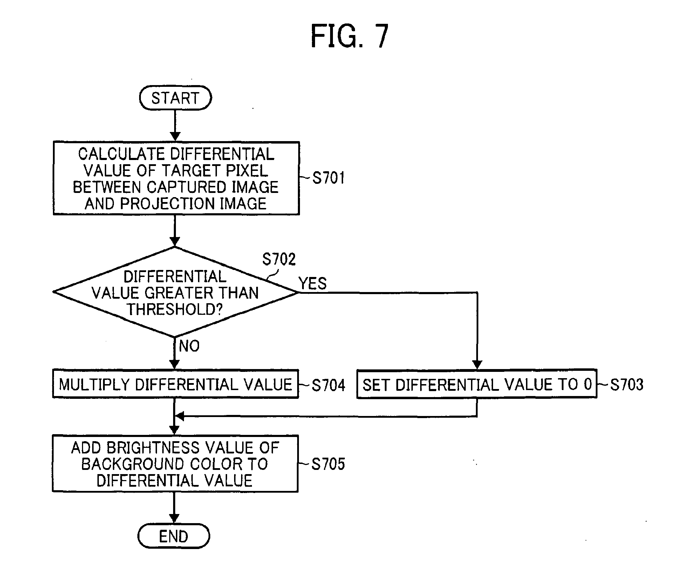

At S407, the differential image generator 216 calculates a differential value of the target pixel, as described below referring to FIG. 7, to obtain the brightness value of the pixel to be included in the differential image for the selected one of the colour components R, G, and B.

At S408, the differential image generator 216 determines whether all pixels in the previous projection image and the captured image have been processed. When it is determined that all pixels in the previous projection image and the captured image are processed ("YES" at S408), the operation proceeds S409. When it is determined that all pixels in the previous projection image and the captured image are not processed ("NO" at S408), the operation returns to S405 to select another target pixel for processing.

At S409, the differential image generator 216 determines whether all colour components have been processed. When it is determined that all colour components have been processed ("YES" at S409), the operation proceeds to S410. When it is determined that all colour components are not processed ("NO" at S409), the operation returns to S403 to select another colour component for processing.

At S410, the differential image generator 216 generates differential images for R, G, and B colour components, by combining the pixels each having the brightness value, or the differential value, calculated at S407. The differential image generator 216 then combines the images of R, G, and B colour components to generate a differential image.

At S411, the differential image generator 216 removes yellow colour components from the differential image, for example, by applying filtering processing to the differential image, and the operation ends.

The operation of FIG. 4 may be performed in various other ways. For example, operation of S411 may be optionally performed. Further, a number or a type of colour components of the image is not limited to three colours of R, G, and B such that any number or type of colours components of the image may be applied.

FIG. 5 is a flowchart illustrating operation of calculating the average ratio value of the target pixel, performed by the differential image generator 216 at S406 of FIG. 4, according to an example embodiment of the present invention.

At S501, the differential image generator 216 specifies a rectangular area having the m X n size that surrounds the target pixel (x,y).

At S502, the differential image generator 216 calculates an average value AVE of the brightness values of pixels included in the rectangular area specified at S501, using the integral image of the captured image for the selected one of the colour components obtained at S404.

At S503, the differential image generator 216 calculates an average ratio value of the target pixel (x,y) using the brightness value of the background colour of the captured image, the brightness value of the target pixel (x,y), and the average value AVE of the brightness values of pixels included in the rectangular area obtained at S502, and the operation ends.

FIG. 6 is a flowchart illustrating operation of calculating the average differential value of the target pixel, performed by the differential image generator 216 at S406 of FIG. 4, according to an example embodiment of the present invention.

At S601, the differential image generator 216 specifies a rectangular area having the m X n size that surrounds the target pixel (x,y).

At S602, the differential image generator 216 calculates an average value AVE of the brightness values of pixels included in the rectangular area specified at S601, using the integral image of the captured image for the selected one of colour components obtained at S404.

At S603, the differential image generator 216 subtracts the average value AVE of the brightness values of pixels included in the rectangular area, from the brightness value of the target pixel (x,y), to calculate the average differential value of the target pixel (x,y), and the operation ends.

FIG. 7 is a flowchart illustrating operation of calculating a differential value of the target pixel between the previous projection image and the captured image, performed by the differential image generator 216 at S407 of FIG. 4.

At S701, the differential image generator 216 calculates a differential value of the target pixel, which is the difference between a value of the target pixel in the captured image and a value of the target pixel in the target pixel in the previous projection image.

At S702, the differential image generator 216 determines whether the differential value of the target pixel, which is calculated at S701, is greater than a threshold. When it is determined that the differential value of the target pixel is greater than the threshold ("YES" at S702), the operation proceeds to S703. When it is determined that the differential value of the target pixel is equal to or less than the threshold ("NO" at S702), the operation proceeds to S704. The threshold is any arbitrary value, which is previously determined. In this example, the threshold is set to -5.

At S703, the differential image generator 216 sets the differential value of the target pixel to 0.

At S704, the differential image generator 216 applies correction processing to the target pixel to improve the colour intensity of the target pixel, by multiplying the differential value of the target pixel with a constant. In this example, the constant is any number that ranges between 1 and 2. This suppresses the negative influences to the colour intensities of the captured image due to capturing, thus improving the visibility of the differential image.

As described above, the brightness value of the target pixel in the differential image is corrected. When the captured image is brighter in pixel values than the projection image, the differential image generator 216 suppresses the negative influences due to capturing, such as the reflection light or the influence by a lighting device. When the differential value between the captured image and the projection image is relatively small, it is assumed that the differential value is caused due to noise. In such case, the negative influence by noise is eliminated in the differential image.

At S705, the differential image generator 216 adds the differential value of the target pixel with the brightness value of the background colour, and the operation ends.

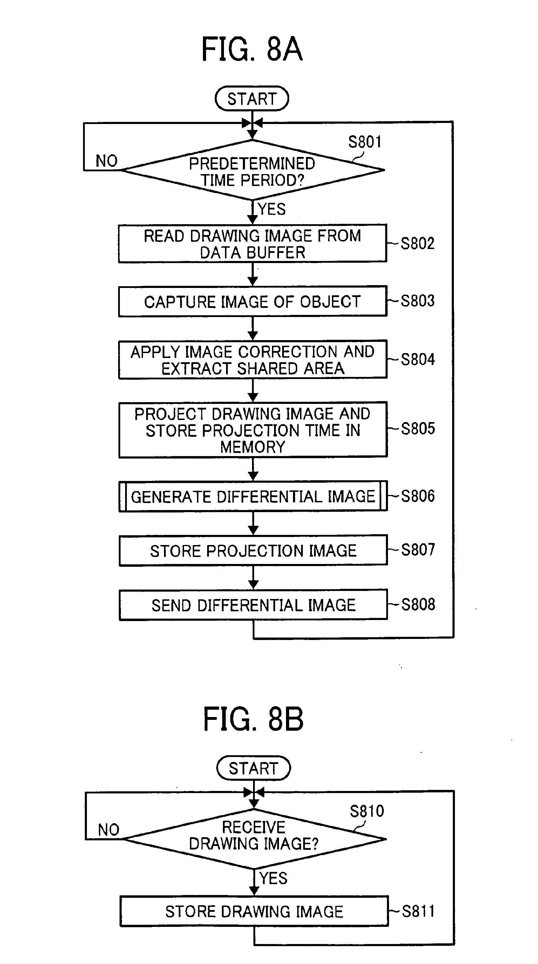

FIGS. 8A and 8B are a flowchart illustrating operation of processing the image to be shared with the remotely located site, performed by the drawing image sharing system 100, according to another example embodiment of the present invention. In this example, the drawing image sharing apparatus 118a causes the image capturing device 116a to capture the image of the object 112a when a predetermined time elapses after the time when the drawing image received from the remotely located site is projected onto the object 112a.

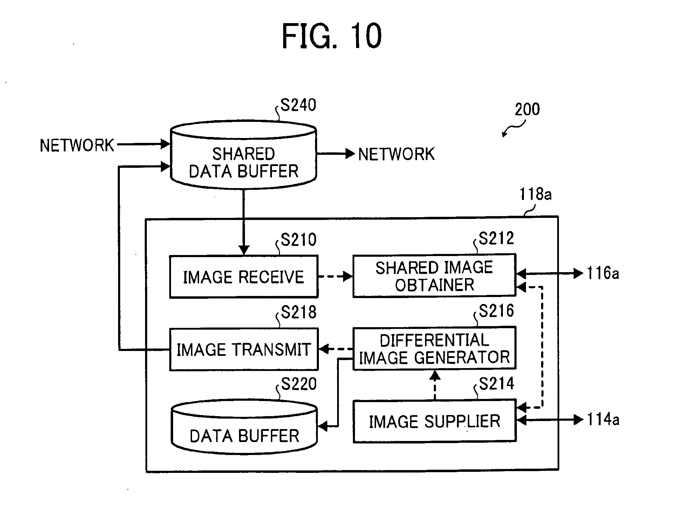

Further, in this example, as illustrated in FIG. 10, the drawing image sharing system 100 is additionally provided with a shared data buffer 240, which stores data to be shared among a plurality of uses of the drawing data sharing system 100 in any desired memory or storage device in a manner that is manageable by a plurality of drawing image sharing apparatuses 118 existed in the drawing data sharing system 100. In such case, the drawing data sharing system 100 of FIG. 1 may be additionally provided with a server having a storage device, which functions as the shared data buffer 240 or the memory to be managed by the shared data buffer 240. In this example illustrated in FIG. 10, the drawing image of the drawing image sharing apparatus 118a and the drawing image of the drawing image sharing apparatus 118b may be stored in the shared data buffer 240 in association with identification information for uniquely identifying the drawing image of each site. Examples of identification information include, but not limited to, identification number, character string, or a combination of identification number and character string.

In another example, the data buffer 220 of the drawing image sharing apparatus 118a may function as the shared data buffer 240 that stores the drawing image of the site 110a and the drawing image of the site 110b.

In another example, the shared data buffer 240 may be provided in the drawing image sharing apparatus 118a such that the shared data buffer 240 stores the drawing image received from the drawing image sharing apparatus 118b in a specific memory address of the shared data buffer 240. In such case, the image receive 210 reads the drawing image received from the remotely located site from the shared data buffer 240.

Referring to FIG. 8A, at S801, the drawing image sharing apparatus 118a determines whether a predetermined time period elapses since the time at which the projection image is projected onto the object 112a for the last time. When it is determined that the predetermined time period has not elapsed ("NO" at S801), the operation repeats S801. In this example, the drawing image sharing apparatus 118a obtains the time at which the projection image is projected for the last time, from the memory such as the RAM, and compares the obtained time with a current time to determine whether the predetermined time period elapses. Further, in this example, the predetermined time period is set to any number that ranges between 200 and 300 msec.

When it is determined that the predetermined time period has elapsed ("YES" at S801), the operation proceeds to S802.

At S802, the drawing image sharing apparatus 118a reads out the drawing image, which is received from the remotely located site and stored in the storage device through the shared data buffer 240 at S811, from the storage device through the shared data buffer 240. The drawing image being read may be stored in the local memory, such as the RAM.

The drawing image sharing apparatus 118a performs S803 and S804 in a substantially similar manner as described above referring to S302 and S303 of FIG. 3.

At S805, the image supplier 214 of the drawing image sharing apparatus 118a causes the projection device 114a to project the most updated drawing image of the remotely located site, which is read out from the storage device through the shared data buffer 240 at S802, onto the object 102a. The drawing image sharing apparatus 118a obtains the time at which the projection image is projected, for example, using the timer function of the OS, and stores the obtained time in the memory such as the RAM.

At S806, the differential image generator 216 generates a differential image, which reflects the difference between the previous projection image previously projected and stored in the memory, and the captured image.

At S807, the differential image generator 216 stores the projection image that is sent by the image supplier 214 to the projection device 114a at S807, in the memory through the data buffer 220, as the previous projection image to be used for processing the shared image for the next time. The differential image generator 216 further sends an instruction to the image transmit 218 to cause the image transmit 218 to send the differential image generated at S806.

At S808, the image transmit 218 sends the differential image to the shared data buffer 240 for storage in the storage device, and the operation returns to S801 to determine whether the predetermined time period has elapsed.

The drawing image sharing apparatus 118b of the system 100 performs operation of FIG. 8A in a substantially similar manner as described above.

The operation of S810 to S811 of FIG. 8B is performed when the server functioning as the shared data buffer 240 receives the drawing image from the drawing image sharing apparatus 118a or 118b.

More specifically, the server may additionally include an image receive that is similar in function to the image receive 210. At S81 0, the image receive of the server determines whether the drawing image is received from any one of the drawing image sharing apparatus 118. When it is determined that the drawing image is not received ("NO" at S810), the operation repeats S810. When it is determined that the drawing image is received ("YES" at S810), the operation proceeds to S811. At S811, the image receive of the server stores the drawing image in the storage device through the shared data buffer 240, and operation returns to S810.

The operation of FIGS. 8A and 8B may be performed in various other ways. For example, assuming that the shared data buffer 240 is incorporated in the drawing image sharing apparatus 118a, the drawing image sharing apparatus 118a stores the drawing image received from the remotely located site, and the drawing image of its own site, in the memory of the drawing image sharing apparatus 118a through the shared data buffer 240.

In such case, the operation of FIG. 8B is performed by the drawing image sharing apparatus 118a. More specifically, at S810, the image receive 210 of the drawing image sharing apparatus 118a determines whether the drawing image is received from the remotely located site. When it is determined that the drawing image is not received ("NO" at S810), the operation repeats S810. When it is determined that the drawing image is received ("YES" at S810), the operation proceeds to S811. At S811, the image receive 210 of the drawing image sharing apparatus 118a stores the drawing image in the memory through the shared data buffer 240, and operation returns to S810.

As described above, operation of processing the drawing image of FIG. 8A and operation of storing the drawing image of FIG. 8B are performed independently from each other. Since the drawing image sharing apparatus 118a does not have to wait for the drawing image to be received from the remotely located site before sending a drawing image of the site 110a, the drawing image sharing apparatus 118a is able to transmit the drawing image of the site 110a to the remotely located site more efficiently. This increases a transmit frame rate, thus improving the real-time capability of the drawing data sharing system 100.

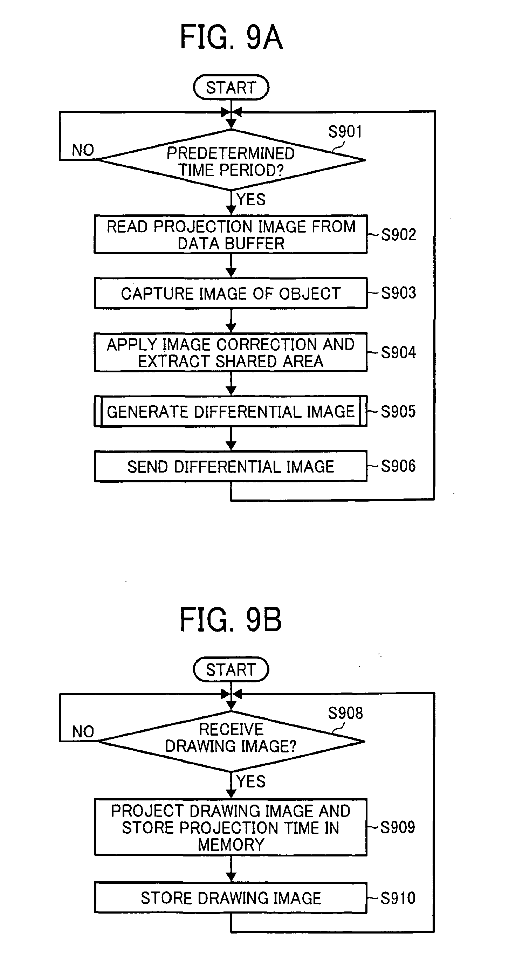

FIGS. 9A and 9B are a flowchart illustrating operation of processing the image to be shared with the remotely located site, performed by the drawing image sharing system 100, according to another embodiment of the present invention. In this example, the drawing image sharing apparatus 118a performs operation of capturing the image of the object 112a and operation of transmitting the differential image as the drawing image (FIG. 9A), independently from operation of receiving the drawing image of the remotely located site and operation of projecting the drawing image (FIG. 9B). Further, operation of capturing described below referring to FIG. 9A and operation of projecting described below referring to FIG. 9B may be concurrently performed.

Referring to FIG. 9A, at S901, the drawing image sharing apparatus 118a determines whether a predetermined time period elapses since the time at which the projection image is projected onto the object 112a for the last time. When it is determined that the predetermined time period has not elapsed ("NO" at S901), the operation repeats S901. In this example, the drawing image sharing apparatus 118a obtains the time at which the projection image is projected for the last time, from the memory such as the RAM, and compares the obtained time with a current time to determine whether the predetermined time period elapses. Further, in this example, the predetermined time period is set to any number that ranges between 200 and 300 msec.

When it is determined that the predetermined time period has elapsed at S901 ("YES" at S901), the operation proceeds to S902.

At 902, the drawing image sharing apparatus 118a reads out the previous projection image, which is stored in the memory such as the HDD through the data buffer 220 at the time when the projection image is projected.

The drawing image sharing apparatus 118a performs S903 to S904, in a substantially similar manner as described above referring to S302 to S303 of FIG. 3.

At S905, the drawing image sharing apparatus 118a generates a differential image, which reflects the difference between the projection image obtained at S902 and the captured image obtained at S904.

At S906, the image transmit 218 of the drawing image sharing apparatus 118a sends the differential image generated at S905 to the storage device through the shared data buffer 240, and the operation returns to S901 to determine whether the predetermined time period has elapsed.

The drawing image sharing apparatus 118b of the system 100 performs operation of FIG. 9A in a substantially similar manner as described above.

The operation of S908 to S910 of FIG. 9B is performed at a predetermined timing, for example, when the server functioning as the shared data buffer 240 sends the drawing image received from the site 110b to the drawing image sharing apparatus 118a. The server may be programmed to send such instruction when the server receives the drawing image from the drawing image sharing apparatus 118b, or when a predetermined time period elapses.

At S908, the image receive 210 of the drawing image sharing apparatus 118a determines whether the drawing image is received from the remotely located site through the shared data buffer 240. When it is determined that the drawing image is not received ("NO" at S908), the operation repeats S908. When it is determined that the drawing image is received ("YES" at S908), the image receive 210 notifies the image supplier 214 that the drawing image is received, and the operation proceeds to S909.

At S909, the image supplier 214 sends the drawing image of the remotely located site to the projection device 116a as the projection image to be projected onto the object 112a. The drawing image sharing apparatus 118a further obtains a current time, for example, using the timer function of the OS to obtain the time at which the projection image is projected, and stores the obtained time in the memory such as the RAM.

At S910, the drawing image sharing apparatus 118a stores the projection image in the storage device through the shared data buffer 240, and the operation returns to S908.

The operation of FIGS. 9A and 9B may be performed in various other ways. For example, assuming that the shared data buffer 240 is incorporated in the drawing image sharing apparatus 118a, the drawing image sharing apparatus 118a stores the drawing image received from the remotely located site, and the drawing image of its own site, in the memory of the drawing image sharing apparatus 118a through the shared data buffer 240.

In such case, at S906, the differential image may be sent to the remotely located site, such as the drawing image sharing apparatus 118b, for storage in the memory of the drawing image sharing apparatus 118b through the shared data buffer 240.

As described above, operation of capturing the image to be shared and operation of projecting the image to be shared are performed independently from each other. Since the drawing image sharing apparatus 118a does not have to wait for the drawing image to be received from the remotely located site before sending the drawing image of the site 110a, the drawing image sharing apparatus 118a is able to transmit the drawing image of the site 110a to the remotely located site more efficiently. This increases a transmit frame rate, thus improving the real-time capability of the drawing data sharing system 100.

Numerous additional modifications and variations are possible in light of the above teachings. It is therefore to be understood that within the scope of the appended claims, the disclosure of the present invention may be practiced otherwise than as specifically described herein.

With some embodiments of the present invention having thus been described, it will be obvious that the same may be varied in many ways. Such variations are not to be regarded as a departure from the spirit and scope of the present invention, and all such modifications are intended to be included within the scope of the present invention.

For example, elements and/or features of different illustrative embodiments may be combined with each other and/or substituted for each other within the scope of this disclosure and appended claims.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, involatile memory cards, ROM (read-only-memory), etc.

Alternatively, any one of the above-described and other methods of the present invention may be implemented by ASIC, prepared by interconnecting an appropriate network of conventional component circuits or by a combination thereof with one or more conventional general purpose microprocessors and/or signal processors programmed accordingly.

In one example, the present invention may reside in a drawing image sharing apparatus including: means for obtaining a drawing image that reflects an image drawn onto a shared area of a drawing object, the drawing image to be shared with a remotely located site; means for displaying a drawing image received from the remotely located site onto the drawing object; a data buffer to store the drawing image received from the remotely located site; means for generating a differential image reflecting the difference between the drawing image stored by the data buffer and the drawing image obtained by the means for obtaining; and means for transmitting the differential image to the remotely located site. The means for obtaining obtains the drawing image drawn onto the shared area before the means for displaying displays the drawing image received from the remotely located site onto the drawing object.

In the above-described drawing image sharing apparatus, in one example, the data buffer stores the drawing image received from the remotely located site after the means for generating generates the differential image. The means for generating generates the differential image based on the drawing image stored by the data buffer and the drawing image obtained by the means for obtaining.

In another example, the present invention may reside in a drawing image sharing apparatus including: means for obtaining a drawing image being displayed onto a shared area to be shared with a remotely located site; means for displaying a drawing image received from the remotely located site onto the drawing object; a data buffer to store the drawing image received from the remotely locate site; means for generating a differential image indicating the difference between the drawing image stored in the data buffer and the drawing image obtained by the means for obtaining; and means for transmitting the differential image to the remotely located site. The means for obtaining obtains the drawing image being displayed onto the shared area of the drawing object after a predetermined time period elapses since a time at which the means for displaying displays the drawing image received from the remotely located site.

In another example, the present invention may reside in a drawing image sharing apparatus including: means for supplying a drawing image received from a remotely located site to a display device to cause the display device to display the drawing image; means for obtaining a drawing image being displayed onto a shared area of the drawing object after a predetermined period has elapsed since a time at which the means for supplying causes the display device to display the drawing image; a data buffer to store the drawing image received from the remotely located site; means for generating a differential image indicating the difference between the drawing image stored in the data buffer and the drawing image obtained by the means for obtaining; and means for transmitting the differential image to the remotely located site, wherein the means for generating, and the means for transmitting are concurrently performed with the means for obtaining.

In any one of the above-described examples, the means for generating calculates, for each of colour components of red, green, and blue, an average differential value of a target pixel of the drawing image obtained by the means for obtaining, and an average differential value of the target pixel of the drawing image stored in the data buffer, to obtain a differential value of the target pixel based on the difference in average differential value between the drawing image obtained by the means for obtaining and the drawing image stored in the data buffer. The means for generating further combines a pixel having the differential value for each of colour components of red, green, and blue to generate the differential image. The average differential value of the target pixel is a brightness value calculated by subtracting an average value of brightness values of pixels surrounding the target pixel from a brightness value of the target pixel.

In any one of the above-described examples, the means for generating calculates, for each of colour components of red, green, and blue, an average ratio value of a target pixel of the drawing image obtained by the means for obtaining, and a differential value of a brightness value of the target pixel of the drawing image stored in the data buffer with respect to the average ratio value of the target pixel of the drawing image obtained by the means for obtaining; and combines a pixel having the differential value for each of colour components of red, green, and blue to generate the differential image. The average ratio value of the target pixel is a brightness value calculated by multiplying a ratio of the brightness value of the target pixel with respect to the average value of the brightness values of pixels surrounding the target pixel of the drawing image obtained by the means for obtaining, with a brightness value of a background colour of the drawing image obtained by the means for obtaining.

In any one of the above-described examples, the means for obtaining causes an image capturing device to capture the drawing image being displayed onto the shared area of the drawing object.

In any one of the above-described examples, the means for supplying supplies the drawing image received from the remotely located site to a projection device to cause the projection device to project the drawing image onto the drawing object for display.

In any one of the above-described examples, the means for supplying causes the projection device to project a marker image onto the drawing object, the marker image being used to specify the shared area of the drawing object. The means for obtaining causes the image capturing device to capture an image being displayed onto the drawing object including the marker image being projected by the projection device, and specifies the shared area of the drawing object based on coordinate values of markers included in the marker image included in the captured image.

In the drawing image sharing apparatus of any one of the above-described examples, the means for supplying causes the projection device to project a white colour image onto the drawing object. The means for obtaining causes the image capturing device to capture an image being displayed onto the drawing object including the white colour image being projected by the projection device, and specifies the shared area of the drawing object based on the difference in brightness value between the white colour image included in the captured image and an area other than the white colour image of the captured image.

In the drawing image sharing apparatus of any one of the above-described examples, the means for obtaining applies perspective transformation to the captured image.

In the drawing image sharing apparatus of any one of the above-described examples, the means for generating applies expansion processing to the projection image, and generates the differential image based on the expanded projection image.

In the drawing image sharing apparatus of any one of the above-described examples, the means for generating applies filtering processing to the differential image to reduce a yellow colour component of the differential image.

In the drawing image sharing apparatus of any one of the above-described examples, the means for generating applies correction processing to the differential image to improve the colour intensity of the differential image.

In one example, the present invention may reside in a data processing method performed by a drawing image sharing apparatus. The method includes: obtaining a drawing image being displayed onto a shared area of a drawing object as an image to be shared with a remotely located site; displaying a drawing image received from the remotely located site onto the drawing object through a display device; generating a differential image indicating the difference between the drawing image received from the remotely located site and the drawing image being displayed onto the shared area of the drawing object; storing the drawing image received from the remotely located site in a data buffer; and transmitting the differential image to the remotely located site.

In one example, the present invention may reside in a data processing method preformed by a drawing image sharing apparatus. The method includes: obtaining a drawing image being displayed onto a shared area of a drawing object as an image to be shared with a remotely located site; displaying a drawing image received from the remotely located site onto the drawing object through a display device; generating a differential image indicating the difference between the drawing image received from the remotely located site and the drawing image being displayed onto the shared area of the drawing object; storing the drawing image received from the remotely located site in a data buffer; and transmitting the differential image to the remotely located site, wherein the step of obtaining the drawing image being displayed onto the shared area of the drawing object is performed after a predetermined time period elapses since the step of displaying the drawing image received from the remotely located site is performed.

In one example, the present invention may reside in a data processing method performed by a drawing image sharing apparatus. The method includes: displaying a drawing image received from a remotely located site onto a drawing object; obtaining a drawing image being displayed onto a shared area of the drawing object as an image to be shared with the remotely located site after a predetermined time period elapses after the drawing image received from the remotely located site is displayed onto the drawing object; generating a differential image indicating the difference between the drawing image received from the remotely located site and the drawing image being displayed onto the shared area of the drawing object; and transmitting the differential image to the remotely located site. The step of obtaining, the step of generating, the step of transmitting, and the step of displaying are performed concurrently.

As described above, the drawing image sharing apparatus 118 of FIG. 1 captures the image being displayed onto the object 112, before displaying the drawing image of the remotely located site onto the object 112. The drawing image sharing apparatus 118 of FIG. 1 generates a differential image that reflects the difference between the captured image and the previous projection image, and transmits the differential image to the remotely located site as the drawing image of its own site. The drawing image sharing apparatus 118 further stores the drawing image of the remotely located site in the desired memory.

In this manner, the drawing image sharing apparatus 118 of FIG. 1 does not have to wait for the projection device 116 to complete projection of the drawing image, which may be otherwise required to provide the projection image that is stable. This greatly reduces the overall processing time required for processing the image to be shared by the system 100. This further increases a number of images that the system 100 can transmit or receive per unit time, thus improving the real-time characteristics of the system 100. Further, the drawing image sharing apparatus 118 of FIG. 1 transmits the differential image to the remotely located site as the drawing image of its own site. This suppresses the negative influences, such as eco phenomenon, caused by superimposed images, thus improving the visibility of the image to be shared.

In one example, the present invention may reside in: a drawing image sharing apparatus including: an image receive to receive a drawing image that reflects drawings drawn onto a second drawing object located at a remotely located site that is remote from a site at which the first drawing object is located; an image obtainer to cause an image capturing device to obtain an image being displayed onto a first drawing object as a captured image; an image supplier to cause a projection device to project the drawing image of the second drawing object onto the first drawing object as a projection image; a differential image generator to obtain a previous projection image that is previously projected onto the first drawing object from a memory, and to generate a differential image that reflects the difference between the previous projection image and the captured image obtained by the image obtainer; a storage to store the projection image being projected onto the first drawing object in the memory as a previous projected image to be used for next processing; and an image transmit to transmit the differential image to the remotely located site for projection onto the second drawing object.

## Claims

1. A drawing image sharing method, comprising:
receiving (S301) a drawing image that reflects drawings drawn onto a second drawing object (112b) located at a remotely located site that is remote from a site at which a first drawing object (112a) is located;
obtaining (S302) an image being displayed onto the first drawing object (112a) as a captured image;
projecting (S304) the drawing image of the second drawing object (112b) onto the first drawing object (112a) as a projection image;
obtaining (S305) a previous projection image that is previously projected onto the first drawing object (112a) from a memory;
generating (S305) a differential image that reflects the difference between the previous projection image and the captured image;
storing (S306) the projection image being projected onto the first drawing object (112a) in the memory as a previous projected image to be used for next processing; and
transmitting (S307) the differential image to the remotely located site for projection onto the second drawing object (112b) as a drawing image of the first drawing object (112a).

2. The method of claim 1, further comprising:
determining whether the drawing image of the second drawing object (112b) is received, wherein the obtaining (S305) obtains the image being displayed onto the first drawing object (112a) when the determining determines that the drawing image of the second drawing object (112b) is received.

3. The method of claim 1 or 2, further comprising:
counting a time period from the time at which the drawing image of the second drawing object (112b) is projected onto the first drawing object (112a) to generate a counted time value; and
determining whether the counted time value reaches a predetermined value, wherein the obtaining (S305) obtains the image being displayed onto the first drawing object (112a) when the determining determines that the counted time value reaches the predetermined value.

4. The method of claim 1, 2, or 3, wherein
the receiving (S301), the projecting (S304), and the storing (S306) are performed concurrently with the obtaining (S302), the generating (S305), and the transmitting (S307).

5. The method of any one of claims 1 to 4, wherein the generating (S305) includes:
calculating (S502) an average differential value of each pixel respectively for the previous projected image and the captured image; and
calculating (S503, S701) a differential value of each pixel to be included in the differential image based on the difference in average differential values between the previous projection image and the captured image.

6. The method of any one of claims 1 to 4, wherein the generating (S305) includes:
calculate (S602) an average ratio value of each pixel respectively for the previous projected image and the captured image; and
calculate (S603, S701) a differential value of each pixel to be included in the differential image based on the difference in average ratio values between the previous projection image and the captured image.

7. The method of any one of the preceding claims, further comprising:
extracting (S303) an area to be shared with the remotely located site from the captured image, wherein the differential image is generated based on the area to be shared that is extracted.

8. The method of claim 7, further comprising:
storing a reference image for specifying the area to be shared in the captured image;
projecting the reference image onto the first drawing object before capturing the image being displayed onto the first drawing object; and
specifying the area to be shared using the reference image included in the captured image.

9. The method of any one of the preceding claims, further comprising:
applying (S303) perspective transformation to the captured image.

10. The method of claim 7 or 8, further comprising:
applying (S401) image processing to the previous projection image to erode or dilate boundaries of the area to be shared in the previous projection image, wherein the differential image is generated based on the processed previous projection image

11. The method of any one of the preceding claims, further comprising:
applying (S411) filtering processing to the differential image to reduce a yellow colour component of the differential image.

12. The method of one of the preceding claims, further comprising:
applying (S704, S705) correction processing to the differential image to improve the colour intensity of the differential image.

13. A drawing image sharing system, comprising:
at least two drawing image sharing apparatuses configured to communicate with one another through a network,
wherein at least one of the at least two drawing image sharing apparatuses performs the method in any one of preceding claims.

14. The drawing image sharing system of claim 13, further comprising:
a server connected to the at least two drawing image sharing apparatuses through the network and configured to store data including the drawing image of the first drawing object and the drawing image of the second drawing object.

15. A computer program comprising program code means that, when executed by a processing device, instructs the processing device to perform the method of any one of claims 1 to 12.
